# EUROPEAN PATENT APPLICATION

(11) **EP 4 450 530 A1**
(43) Date of publication of application: **23.10.2024**
(21) Application number: 23168152.9
(22) Date of filing: 16.04.2023
(51) Int. Cl.: C08G 8/28, C08H 7/00

(54) **MODIFIED RESINS BASED ON RESINOUS OLIGOMERIC OR POLYMERIC PHENOLIC MATERIALS**

(71) Applicant: Prefere Resins Holding GmbH, 15537 Erkner (DE)
(72) Inventor: KNIE, Christopher, 12459 BERLIN (DE); WINTER, Johannes Georg, 58239 SCHWERTE (DE)
(74) Representative: Deckers, Hellmuth Alexander

(57) **Abstract**

The invention is directed to modified resins **M** based on oligomeric or polymeric phenolic materials **K,** where diazonium compounds **B** carrying at least one further functional group which is hydrophilic or hydrophobic, or alters the surface tension or of the resins so modified, are coupled to the said phenolic materials **K** via an azo coupling reaction. The oligomeric or polymeric phenolic materials **K** are selected from the group consisting of novolaks **N,** resoles **R,** and polymers **P** particularly including lignin **L** and tannin **T,** having aromatic moieties with increased electron density in comparison with benzene at unsubstituted carbon atoms in the said aromatic moiety. The diazonium group-containing modifiers **B** are aromatic compounds having a diazonium group of formula -^{⊕}N≡N, and at least one further functional group which is hydrophilic or hydrophobic, or otherwise influences the cohesion and adhesion properties of the resins so modified, such as perfluoroalkyl groups or oligo- and poly-siloxane groups.

## Description

### Field of the Invention

This invention is directed to modified resins **M** obtainable by modification of resins **K** with aromatic diazonium compounds **B** via azo coupling, which resins **K** are resinous oligomeric or polymeric phenolic materials based on phenolic bodies including phenol and/or substituted phenols, made by addition and condensation reactions with formaldehyde, these reaction products hereinafter referred to as "PF resins" and those modified phenolic materials derived from the said PF resins by replacing, partially or completely, these phenolic bodies as mentioned supra by hydroxyaromatic compounds of natural origin, such as lignin, tannin, or long-chain alkylphenols extracted from nutshells, and/or by replacing, partially or completely, formaldehyde by other aldehydes **A,** preferably aliphatic monoaldehydes and/or dialdehydes, together hereinafter referred to as "modified phenolic resins" or "MPF". The invention is also directed to a process to prepare the modified resins **M** by reaction of PF or MPF or mixtures of both with aromatic diazonium compounds **B**, and to a method of using such modified resins **M,** preferably in binders for coatings or adhesives. The aryl diazonium compounds **B** are aromatic compounds having a diazonium group of formula -^{⊕}N≡N bound to an aromatic carbon atom, and preferably at least one further functional group **F.**

### Background of the Invention

Aryl diazonium compounds, also referred to simply as "diazonium compounds" in the context of this invention, are commercially used in the preparation of azo dyes where the so-called "azo coupling" occurs, i. e., an electrophilic substitution reaction of an aromatic diazonium compound Ar-N^{⊕}≡N X^{⊝} with a nucleophilic molecule, usually a further aromatic compound that preferably has an increased electron density in its aromatic ring compared to a benzene molecule, due to electron-donating substituents such as hydroxyl groups, amino groups, alkoxy groups, alkylamino groups, dialkylamino groups, and alkyl groups. The nucleophilic molecules are therefore preferably phenols, aminophenols, alkoxy aromatics, (di)alkylamino-aromatics, and alkylaromatics, and particularly preferred, alkyl phenols and alkoxy phenols.

In US 3274166 A, a process of modifying a hydrocarbon polymer has been disclosed which comprises heating said hydrocarbon polymer in admixture with a polymer of a poly(diazo) compound selected from the group consisting of R-[O-C(O)-C(R')=N^{⊕}=N^{⊝}]ₓ; A-[C(R')=N^{⊕}=N^{⊝}]ₓ, and A-[C(O)-C(R")=N^{⊕}=N^{⊝}]ₓ where x is an integer of from 2 to 4, R is an organic group inert to -modifications, A is an aromatic group inert to modifications, R' is selected from the group consisting of H, alkyl, aryl, and C(O)OZ groups, where Z is an alkyl or aryl group, and R" is selected from the group consisting of H, alkyl and aryl radicals, said heating being at the decomposition temperature of said poly(diazo) compound whereby chemical bonding is effected between the polymer molecules. Examples of these poly(diazo) compounds are the bis(diazoacetate) ester of 1,6-hexanediol, the bis (diazoacetate) ester of 1,10-decanediol, the tetra (diazoacetate) ester of pentaerythritol, and the bis(diazoacetate) ester of diethylene glycol. As mentioned in this document, it is believed that the poly(diazo) compounds react by eliminating nitrogen, leaving a carbene group at each end of the molecule. These free carbene groups then react with the hydrocarbon polymer and act as crosslinkers.

There has not yet been mention of the use of diazonium compounds which have no further substituents on the aromatic ring(s), and of diazonium compounds also carrying other functional groups **F** bound to the aromatic ring(s), as reactants in an azo coupling with oligomeric or polymeric aromatic compounds **K** to modify the reactivity, solubility or phase interface properties of the said oligomeric or polymeric aromatic compounds **K.** An "other functional group" in the context of this invention is any atom or group which is different from a hydrogen group, H-. The oligomeric or polymeric aromatic compounds **K** are preferably resinous oligomeric or polymeric phenolic materials, including phenolic resins PF which are derived from phenols and aldehydes, preferably formaldehyde, or modified phenolic resins MPF which have been modified by incorporation of naturally occurring phenolic bodies such as lignin, and tannin, either as addition thereof to the phenol component to the resinification process, in their native form, or at least partly depolymerised by the commercial processes to isolate these materials, or as preformed condensation products with aldehydes to resins made from the commonly used starting materials, viz., phenol and derivatives thereof including alkylphenols such as cresols, xylenols, nonylphenols, and long chain-alkyl substituted phenols isolated from cashew nutshell oil. These latter are mixtures comprising, as main components, cardanol, cardol and methylcardol; they carry up to three olefinic unsaturations, and can be easily hydrogenated to yield 3-n-pentadecylphenol, 5-n-pentadecylresorcinol, and 2-methyl-5-n-pentadecylresorcinol.

### Object of the Invention

The properties of phenolic resins PF, or of modified phenolic resins MPF, are largely determined by their composition, i. e., by the kind and the amount of starting materials (educts) used for their synthesis. It is an object of the invention to provide a possibility to modify these properties, such as reactivity, solubility, interfacial properties such as surface tension, emissions of residual monomers, optical, and mechanical properties, without a substantial change of the kind and the amount of starting educts. It is possible, according to the invention, to retain favourable mechanical or chemical properties of the resins so modified by applying the modifying compound, viz., the aromatic diazonium compounds **B,** to the ready-made resin, or to the precursors or intermediate products used in the synthesis of the modified resins **M.**

### Summary of the Invention

The invention is therefore directed to modified resins **M** based on resinous oligomeric or polymeric phenolic materials **K,** wherein aromatic diazonium compounds **B** having a diazonium group of formula -^{⊕}N≡N bound to an aromatic carbon atom, are coupled to the said phenolic materials **K** via an azo coupling reaction, which diazonium compounds **B** either carry no additional group, or preferably carry at least one further functional group **F** which is capable of modifying the reactivity, solubility, or phase interface properties of the modified resins **M** to obtain, e. g., hydrophilically or hydrophobically modified resins **M,** or modified resins **M** with altered surface tension or sorption properties, or other altered physical or chemical properties.

The resinous oligomeric or polymeric phenolic materials **K** are preferably selected from the group consisting of novolaks **N**, resoles **R,** and polymers **P** particularly based on reaction products of aldehydes as detailed infra, with lignin **L,** and tannin **T,** which oligomeric or polymeric phenolic materials **K** also include novolaks and resoles where at least a part of the phenols is replaced by lignin or tannin or other naturally occurring substituted phenols, or a mixture thereof, having aromatic moieties with increased electron density in comparison with benzene at unsubstituted carbon atoms in the said aromatic moiety.

As is known to a person skilled in the art, the increase or decrease in electron density in any aromatic system which is due to a first substituent can be measured by the dipole moment of a singly substituted aromatic compound in comparison to the unsubstituted aromatic compound, or by comparison of the reaction rate of a singly substituted aromatic compound and that of the corresponding unsubstituted aromatic compound in an electrophilic reaction with the same electrophilic compound, such as in the nitration of an aromatic compound by a NO₂^{⊕} cation, see, e. g., Peter Sykes, "A Guidebook to Mechanism in Organic Chemistry", Chapter 6: "Electrophilic and Nucleophilic Substitution in Aromatic Systems; 6.7: "Electrophilic Attack on C6H5Y", et seq., 6th edition, New York 1985.

It has been found in the experiments which have led to the present invention that the azo coupling of diazonium group-containing modifiers **B** which are aromatic compounds having a diazonium group of formula -^{⊕}N≡N, and preferably at least one further functional group as detailed supra with resinous oligomeric or polymeric phenolic materials **K** leads to modified resins **M** where the degree of modification relative to the unmodified resin **K** can be tailored by varying the ratio *m*_{B} / *m*_{K} of the mass *m*_{B} of the said diazonium group-containing modifiers **B** to the mass *m*_{K} of the unmodified resin **K** in the diazo coupling reaction, and by varying the nature of the diazonium group-containing modifiers **B.**

### Detailed Description of the Preferred Embodiments

The diazonium group-containing modifiers **B** are aromatic compounds having within their molecule: a diazonium group of formula -^{⊕}N≡N, and either no additional group, or preferably, at least one further functional group **F** which is selected from the group consisting of hydroxyl groups-OH, linear or branched alkyl groups -Cₙ H₂ₙ₊₁ having from n = 1 to n = 20 carbon atoms; linear or branched alkoxy groups -O-CₙH₂ₙ₊₁ having from n = 1 to n = 20 carbon atoms; linear or branched alkoxycarboxy groups -C(O)-O-Cₙ H₂ₙ₊₁ having from n = 1 to n = 20 carbon atoms; linear or branched alkylcarbonyl groups -C(O)-Cₙ H₂ₙ₊₁ having from n = 1 to n = 20 carbon atoms; aryl groups having from five to twenty carbon atoms; heteroaryl groups having from two to twenty carbon atoms and at least one hetero atom which is selected from the group consisting of oxygen -O- groups, sulphur -S- groups, and nitrogen, in the form of -N= groups or imine -N(H)- groups, where, in the case of two or more hetero atoms, these heteroatoms or heteroatom-containing groups, may be the same, or may be different from each other; alkylamino groups 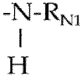 and dialkylamino groups

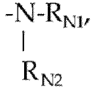

where R_{N1} and R_{N2} may be the same, or may be different from each other, and are independently selected from linear or branched alkyl groups -Cₙ H₂ₙ₊₁ having from n = 1 to n = 20 carbon atoms; aldehyde groups -C(O)-H; phosphate -O-P(O)(OR_{P})₂ groups, where the groups R_{P} may be the same, or may be different from each other, and are independently selected from linear or branched alkyl groups -Cₙ H₂ₙ₊₁ having from n = 1 to n = 20 carbon atoms; phosphonate -P(O)(OR_{P})₂ groups, where the groups R_{P} may be the same, or may be different from each other, and are independently selected from linear or branched alkyl groups -Cₙ H₂ₙ₊₁ having from n = 1 to n = 20 carbon atoms; carboxylic acid groups -C(O) - OH; sulphonic acid groups -S(O₂) - OH; phosphonic acid groups -P(O)(OH)₂; cyanate -O-C=N groups; nitro -NO₂ groups; thiol -SH groups; halogen -F, -Cl, -Br, -I groups; cyano (=nitrile) -C=N groups; aldehyde -C(O)-H groups; (per)fluoroalkyl groups; oligo-siloxane groups; and poly-siloxane groups. Depending on their chemical nature, these groups are hydrophilic or hydrophobic, and add a further functionality to the diazonium group-containing modifiers **B,** and thus change the physicochemical properties of the resins **M** so modified, e. g., hydrophilicity or hydrophobicity, phase interface properties such as sorption, surface properties, cohesion and adhesion properties, solubility, light and chemical resistance, and chemical reactivity.

The simplest modifier **B** which has no further reactive group is made by diazotisation of aniline, under formation of a molecule of the structure C₆H₅ - ^{⊕}N≡N + X^{Θ}, where X^{Θ} is the anion of the acid present in the formation of a diazonium salt **B** derived from aniline.

Preferred modifiers **B** are made from primary aromatic monoamines having further acid functional groups, particularly, sulphonic acid groups, carboxylic acid groups, and phosphonic acid groups which render the resins **M** modified therewith more hydrophilic. The modifiers **B** that increase the hydrophilicity are preferably selected from the group consisting of ortho-, meta-, and para- aminobenzene sulphonic acids, naphthalenesulphonic acids further comprising at least one hydroxyl group and/or at least one amino group, together also known as "Buchstabensäuren" which are additionally substituted aminonaphthalene sulphonic acids including Cleve β-acid (5-aminonaphthalene-2-sulphonic acid), Cleve γ-acid (4-aminonaphthalene-2-sulphonic acid), naphthionic acid (1-aminonaphthalene-4-sulphonic acid), Laurent acid, also known as purpurinic acid (1-aminonaphthalene-5-sulphonic acid), 1,7-Cleve acid (6-aminonaphthalene-2-sulphonic acid), peri acid (1-aminonaphthalene-8-sulphonic acid), Tobias acid, also known as A acid (2-aminonaphthalene-1-sulphonic acid), Dahl acid I (2-aminonaphthalene-5-sulphonic acid), Cassella F acid (2-aminonaphthalene-7-sulphonic acid), Brönner acid (2-aminonaphthalene-6-sulphonic acid), Erdmann acid (2-aminonaphthalene-7-sulphonic acid), and aminocroceine acid (2-aminonaphthalene-8-sulphonic acid), aminonaphthalene disulphonic acids including Kalle acid (1-aminonaphthalene-3,6-disulphonic acid), Freund acids II and III (1-aminonaphthalene-3,6-disulphonic acid and 1-aminonaphthalene-3,7-disulphonic acid), amino epsilon acid (1-aminonaphthalene-3,8-disulphonic acid), Dahl acids II and III (1-aminonaphthalene-4,6-disulphonic acid and 1-aminonaphthalene-4,7-disulphonic acid), C acid (2-aminonaphthalene-4,8-disulphonic acid), amino G acid (2-aminonaphthalene-5,8-disulphonic acid), and further, the hydroxyaminosulphonic acids referred to as Böninger acid (1-aminonaphthalene-2-hydroxy-4-sulphonic acid), M acid (8-amino-4-hydroxynaphthalene-2-sulphonic acid), I acid (7-amino-4-hydroxynaphthalene-2-sulphonic acid), Sulfo-I acid (2-amino-5-hydroxynaphthalene-1,7-disulphonic acid), γ acid (6-amino-4-hydroxynaphthalene-2-sulphonic acid), RR acid (3-amino-5-hydroxynaphthalene-2,7-disulphonic acid), S acid (4-amino-5-hydroxynaphthalene-1-sulphonic acid), K acid (4-amino-5-hydroxynaphthalene-1-sulphonic acid), H acid (4-amino-5-hydroxynaphthalene-2,7-disulphonic acid), SS acid, also known as Chicago SS acid (4-amino-5-hydroxynaphthalene-1,3-disulphonic acid), and the aminotrisulphonic acid "Koch acid" (1-aminonaphthalene-3,6,8-trisulphonic acid).

Enhanced reactivity, particularly in the diazo coupling with a lignin **L,** can be realised by using modifiers **B** that introduce reactive sites, such as diazonium group-containing modifiers having an aromatic nucleus with addition phenolic hydroxyl groups as functional groups **F,** as an example, the diazonium salt derived from 3,5-dihydroxyaniline which has a reactive site that reacts easily with an aldehyde, in the para-position (carbon atom 4) to the diazonium group. It has been found that increased reactivity can already be obtained with a low mass ratio *m*(**B**) / *m*(**K**) of the mass *m*(**B**) of aromatic diazonium compounds **B** to the mass *m*(**K**) of the resinous oligomeric or polymeric phenolic materials **K** if a lignin **L** is chosen as resinous oligomeric or polymeric phenolic material, in the range of from 1 g/kg to 100 g/kg (between 0.1 % and 10 %), in the case of using the diazonium salt derived from 3,5-dihydroxyaniline as modifier **B.**

The diazonium group-containing modifiers **B** can be prepared by reaction of aromatic primary amines with nitrous acid in the presence of additional acid at low temperatures, i.e., under cooling with ice. The aromatic primary amine which may also have further functional groups is dissolved in water, in the presence of a stoichiometric excess of acid such as hydrochloric acid, the solution is cooled to a temperature of preferably between 0 °C and 5 °C, where the amine hydrochloride usually precipitates in the form of crystals. An aqueous solution of sodium nitrite is slowly added, keeping the temperature in the mentioned range, until the nitrite is no longer consumed. During the reaction, the amine hydrochloride dissolves and forms the easily soluble diazonium salt. This diazonium salt solution can react with phenolic compounds under formation of usually coloured azo compounds where both aromatic nuclei are connected via an azo group - N = N -, preferably in the para-position to a hydroxy group of the said phenolic compounds.

Among the oligomeric or polymeric resinous phenolic materials **K,** phenolic resins such as novolaks **N** and resoles **R** are preferred which can be prepared by reaction of phenolic bodies **C** with aldehydes **A,** preferably aliphatic monoaldehydes **A1A** such as formaldehyde, acetaldehyde, propionaldehyde, butyric and isobutyric aldehyde; preferably formaldehyde; aliphatic dialdehydes **A2A** such as glyoxal, malonaldehyde (propanedial), succinaldehyde (butanedial), glutaraldehyde (pentanedial), and adipaldehyde (hexanedial), preferably glyoxal; cycloaliphatic monoaldehydes **A1C,** including furfural (IUPAC name: furan-2-carbaldehyde), 5-hydroxymethylfurfural (IUPAC name: 5-(hydroxymethyl)furan-2-carbaldehyde); and cycloaliphatic dialdehydes **A2C,** such as furane-2,5-dicarbaldehyde, and the isomeric 1,2-, 1,3-, and 1,4-cyclohexane dicarbaldehydes. Phenolic bodies C include aromatic compounds having at least one hydroxyl group bound to a carbon atom which is part of a mononuclear aromatic compound, and at least one unsubstituted carbon atom which carries a hydrogen atom, and is part of the same ring, which unsubstituted carbon atom is preferably in ortho position or para position, and less preferred, in meta position, with respect to the carbon atom carrying the hydroxyl group in the case of a six-membered ring, and has increased electron density in comparison with a carbon atom in benzene, via the mesomeric effect and/or the inductive effect. These phenolic bodies C may have linear or branched alkyl groups having up to twenty carbon atoms attached to the aromatic nuclei, where it is also possible that these alkyl substituents have the same, or different numbers of carbon atoms, or may be differently branched, or have olefinic unsaturation in their chains. This definition also includes the naturally occurring phenols in the plant anacardium occidentale, the main products of which are cardanol, viz., 3-[(8Z,11Z)-pentadeca-8,11,14-trienyl]phenol, cardol, viz., 5-[(9*E*,12*E*)-pentadeca-9,12-dienyl]benzene-1,3-diol, and 2-methylcardol, viz., 2-methyl-5-[(9*E*,12*E*)-pentadeca-9,12-dienyl]benzene-1,3-diol, all commercially recovered from cashew nutshell liquid. The phenolic bodies useful for this invention are grouped into mononuclear monohydroxy aromatic compounds **C11,** such as phenol itself, ortho-, meta-, and para-cresol, 2,4- and 2,6-xylenol, mononuclear aromatic compounds **C12** having at least two hydroxyl groups, such as catechol, resorcinol, hydroquinone, pyrogallol, phloroglucinol, and hydroxyquinol, multinuclear monohydroxy aromatic compounds **CM1** having at least two aromatic rings annealed or otherwise chemically bound, such as 4-hydroxydiphenyl, alpha-naphthol, and beta-naphthol, and multinuclear aromatic compounds **CM2** having at least two aromatic rings annealed or otherwise chemically bound, and at least two hydroxyl groups such as bisphenol A, IUPAC name: [2-(4-hydroxyphenyl)propan-2-yl]phenol), the mixture of isomers known as "bisphenol F", IUPAC name of a typical isomer: 4-[4-hydroxyphenyl)-methyl]phenol), 4,4'-dihydroxybenzophenone, the bisphenol S mixture of isomers (4,4'-di-hydroxydiphenylsulphone, IUPAC name: 4-[4-hydroxybenzenesulphonyl]phenol, and 4,2'-di-hydroxydiphenylsulphone), and 1,3,5-tris(4-hydroxyphenyl)benzene, IUPAC name 4-[3,5-bis(4-hydroxyphenyl)phenyl]phenol. Further phenolic bodies which can be used in the present invention are obtained by depolymerisation or combined depolymerisation/- demethylation of lignin to mono- or oligonuclear molecules.

Preferred are resoles **R** and novolaks **N** derived from phenol and formaldehyde, mixtures thereof with condensates made from lignin and formaldehyde, tannin and formaldehyde, and cocondensates from phenol and lignin, or from phenol and tannin, with formaldehyde. It is also possible, within the scope of the invention, to replace, partially or completely, formaldehyde by other aliphatic monoaldehydes and dialdehydes as detailed supra, and preferably, by aldehydes made from a natural base material, such as furfural, 5-hydroxymethylfurfural, and 2,5-furandicarbaldehyde.

Phenolic bodies also include lignins **L** which are generally classified into the groups of softwood, hardwood, and grass lignins. These native lignins are typically separated from the wood or other lignocelluloses in the form of "milled wood lignin" (MWL), "dioxane lignin", or "enzymatically liberated lignin". Industrially based technical lignins are by-products of chemical pulping processes which are directed to isolate the fibrous material (cellulose) from the lignocellulose: Kraft lignin (or sulphate lignin), alkali lignin (or soda lignin), and lignosulphonates are derived from lignocellulose subjected to the Kraft, the soda-anthraquinone, and the sulphite pulping processes, respectively. A further lignin source is the so-called acid hydrolysis lignin which is still mostly converted to pellets for firing. Other lignin grades have been made accessible by more recent processes, viz., the organosolv process which provides a sulphur-free high purity lignin grade, and the hydrolysis process which is acid-catalysed and leads to formation of the so-called Hibbert ketones and of free phenolic moieties. Other emerging processes are the steam-explosion process and the ammonia-fibre expansion process. Any of these lignin materials may be used in the present invention.

Lignin materials provided by different sources and separated from the cellulose and hemicellulose accompanying materials in lignocellulose by the different processes as detailed supra differ from each other, not only in the composition with regard to the shares of 4-hydroxyphenyl-, guaiacyl- (3-methoxy-4-hydroxyphenyl-), and syringyl- (3,5-dimethyoxy-4-hydroxyphenyl-) units of the C₉-building blocks in lignin, which is different for gymnosperms (predominantly guaiacyl units), angiosperms (both guaiacyl and syringyl units), and grass (predominantly 4-hydroxylphenyl units), but also in the decomposition products obtained, as the decomposition process follows different routes depending on the kind of pulping process. Therefore, the lignins obtained by the processes supra have also variations in the molar mass, as reported in "Molar mass determination of lignins by size-exclusion chromatography", S. Baumberger et al., Holzforschung 2007 (61), pages 459 to 468.

It is also possible to generate fractions of high molar mass lignin, and low molar mass lignin by fractionated precipitation, see WO 2013/144 453 A1. These lignin fractions may be collected, e. g., in a first mixture comprising substantially lignin oligomers and polymers of a low degree of polymerisation (hereinafter each individually, and all collectively referred to as low molar mass lignins, "LML") having from 1 to 10 monomer units, and in a second mixture comprising substantially lignin polymers (hereinafter collectively referred to as high molar mass lignins, "HML") having from 11 to 70 monomer units. Any larger number of mixtures, each comprising different groups of oligomers and polymers, may also be collected from the isolated fractions provided by controlled precipitation, or other separation processes. The molar masses of lignin can be determined according to the method described in Linping Wang et al., Holzforschung 2019; 73(4): 363 to 369, by size-exclusion chromatography of acetylated samples of the lignin fractions. These mixtures can be condensed individually with aldehydes, and mixed thereafter, or they can be condensed in sequence, and the addition time of phenol and aldehyde can be varied. In WO 2013/144 453 A1, the use of certain combinations of lignin fractions of different molar mass leads to different levels of the possibility of substitution of phenol by lignin.

Lower molar mass lignins which have higher reactivity can be obtained by controlled degradation, or decomposition. Several ways of achieving controlled degradation, or decomposition have been described in the literature, including enzymatic decomposition, oxydative cleavage, pyrolysis, and treatment with radical forming systems.

It is also possible to purify lignin from any of the sources mentioned, by a plethora of methods including ultrasonic extraction, solvent extraction, dialysis, and hot water treatment. It is particularly important to remove inorganic impurities such as sulphur which stems from the process chemicals.

The reactivity of lignin can be increased by various processes, including demethylation, methylolation/hydroxymethylation, phenolation/phenolysis, reduction, oxydation, hydrolysis, and alkalation. See, e.g. Hu, LiHong, et al., Bioresources 6(3), pages 3515 to 3525, and WO 2013/144 454 A1.

All modified lignins mentioned hereinabove, as well as native lignins, and lignins obtained by the processes described in the literature can be used as lignins **L,** in the context of the present invention.

The natural aromatic polymers **P** other than lignin having aromatic moieties with increased electron density in comparison with benzene at unsubstituted carbon atoms in the said aromatic moiety are preferably selected from the group consisting of tannins **T,** particularly gallotannins, ellagitannins, complex tannins and condensed tannins. As these compounds have many phenolic hydroxyl groups, it has proved to be advantageous to conduct the azo coupling in a weakly alkaline medium to convert the phenolic hydroxyl groups to phenolate ions, thus providing a higher electron density in the aromatic rings and thereby facilitating the coupling reaction.

Further aromatic polymers **P** based on natural polymers can be used, especially based on polysaccharides such as cellulose, amylose, amylopectin, and those based on amino polysaccharides such as chitin and chitosan; in order to be able to react with the electrophilic diazonium compound **B,** these saccharides and aminosaccharides may be grafted with electron-rich aromatic compounds having reactive groups, e. g., (di)methoxystyrene. Such grafting can also be applied to lignins, where an improvement of reactivity of the graft product toward electrophilic substitution in the aromatic moieties has been noted.

The novolaks **N**, resoles **R,** lignin **L,** tannin **T,** and also the other polymers **P** can each be used alone, in combination with other components of the same class, or with at least one component of at least one other class. Therefore, combinations of at least two novolaks **N1** and **N2** which are chemically or physically different, combinations of at least two resoles **R1** and **R2** which are chemically or physically different, by changing the phenol component or the aldehyde component, or the degree of polymerisation, and also combinations of a novolak **N** and a resole **R,** and combinations of either of both or a resole **R** and a novolak **N** with one or more of a lignin **L,** a mixture of lignin components comprising at least two fractions **L1** and **L2** of lignin molecules having different degrees of polymerisation or different compositions in terms of the relative abundance of H, G, and S units, and a tannin **T** can also be used within the scope of this invention.

The modified resins **M** of the present invention are preferably made in the following way:
- a solution of a primary aromatic amine, optionally having a functional group **F** as detailed supra as further substituent, in an aqueous acid is prepared, and cooled to a temperature of 25 °C or less, preferably not more than 20 °C, particularly preferred, not more than 15 °C, and especially preferred, not more than 10 °C, and most preferred, not more than 5 °C,
- to the solution of the first step, a solution of an alkali nitrite is added preferably in an amount such that the amount of substance of nitrite ions NO₂^{⊝} present in the reaction mixture is equal to the amount of substance of amino groups in the aromatic amine, and mixed at a temperature of 25 °C or less, preferably not more than 20 °C, particularly preferred, not more than 15 °C, and especially preferred, not more than 10 °C, and most preferred not more that 5 °C, (at the end of the addition of nitrite, it is recommended to add only small quantities of nitrite solution until the test for free nitrous acid using a test paper impregnated with iodide and starch remains positive for five minutes, which indicates the completion of the reaction, and then to remove the excess nitrous acid by addition of a small amount of urea or sulphaminic acid)
- the mixture of the second step is added to a solution or slurry of at least one oligomeric or polymeric phenolic material **K** having aromatic moieties with increased electron density in comparison with benzene at unsubstituted carbon atoms in the said aromatic moiety. This latter step is usually conducted in a pH range of weakly alkaline (pH > 7.5) to alkaline conditions (pH ≤ 10) as is usual in the diazo chemistry for phenolic bodies as coupling components.

It is also possible, in the scope of the present invention, to use the modifiers **B** in the form of solid diazonium salts, which are prepared according to any of DE 25 212 650 A1 and EP 0 125 587 A1.

In a preferred embodiment, the oligomeric or polymeric resinous phenolic materials **K** is a novolak **N**, or a lignin **L,** or a resol **R,** or mixture of at least two of a novolak **N**, a resol **R,** and a lignin **L.**

Depending on the envisaged application, the ratio *m*(**B**) / *m*(**K**) of the mass *m*(**B**) of aromatic diazonium compounds **B** to the mass *m*(*K*) of the resinous oligomeric or polymeric phenolic materials **K** can be chosen between 0.1 % and 50 %, preferably between 0.5 % and 35 %, and particularly preferred, between 1 % and 25 %. The low mass ratios can preferably be used for colouration (colour coding) of the modified resins **M** so obtained, using the colour developed by the diazo coupling products, while the highest mass ratios are preferably used to modify the solubility properties and the surface properties, particularly with regard to chemical and environmental stability, of the modified resins **M** so obtained. It goes without saying that the term "mass *m*(**K**) of the resinous oligomeric or polymeric phenolic materials **K"** refers not to the mass of the solution or the mass of the slurry, but only to the mass of the dissolved of the resinous oligomeric or polymeric phenolic materials **K** in the solution, or the mass of dispersed resinous oligomeric or polymeric phenolic materials **K** in the slurry. Likewise, the "mass *m*(**B**) of aromatic diazonium compounds **B"** refers only to the mass of the solute.

The modified resins **M** of the present invention can be used for a wide variety of applications, particularly as adhesives for composite wood materials, as binders for organic or inorganic fibre products, as binders in abrasive materials or in friction materials such as brake pads, in heat and sound insulation materials, as foams, as binders for coatings, or as foundry moulds. They are also particularly suited for applications in elevated temperature regimes.

### Embodiments of the Invention

The following embodiments are encompassed:
Embodiment 1. Modified resins **M** based on resinous oligomeric or polymeric phenolic materials **K,** where aromatic diazonium compounds **B** having a diazonium group of formula -^{⊕}N≡N bound to an aromatic carbon atom, which aromatic diazonium compounds **B** either carry no additional functional group, or carry at least one further functional group **F** which is capable of modifying the reactivity, solubility, or phase interface properties of the modified resins **M,** are coupled to the said phenolic materials **K** via an azo coupling reaction.
Embodiment 2. The modified resins **M** of Embodiment 1, wherein the resinous oligomeric or polymeric phenolic materials **K** are prepared by reaction of phenolic bodies **C** with aldehydes **A,** wherein the aldehydes are selected from the group consisting of aliphatic monoaldehydes **A1A,** cycloaliphatic monoaldehydes **A1C,** aliphatic dialdehydes **A2A,** and cycloaliphatic dialdehydes **A2C,** and of mixtures of two or more of these.
Embodiment 3. The modified resins **M** of Embodiment 1 or of Embodiment 2, wherein the resinous oligomeric or polymeric phenolic materials **K** are prepared by reaction of phenolic bodies **C** with aldehydes **A,** wherein the phenolic bodies **C** are selected from the group consisting of mononuclear monohydroxy aromatic compounds **C11,** mononuclear aromatic compounds **C12** having at least two hydroxyl groups bound to an aromatic carbon atom, multinuclear monohydroxy aromatic compounds **CM1,** and multinuclear aromatic compounds **CM2** having at least two hydroxyl groups bound to an aromatic carbon atom.
Embodiment 4. The modified resins of Embodiment 2 or of Embodiment 3, wherein the aliphatic monoaldehydes **A1A** are selected from the group consisting of formaldehyde, acetaldehyde, propanal, n-butanal, 2-methyl-n-butanal, n-pentanal, and methylglyoxal (2-oxopropanal), and of mixtures of two or more of these.
Embodiment 5. The modified resins of Embodiment 2 or of Embodiment 3, wherein the aliphatic dialdehydes **A2A** are selected from the group consisting of glyoxal, malondialdehyde, succindialdehyde, glutardialdehyde, and adipaldehyde, and of mixtures of two or more of these.
Embodiment 6. The modified resins of Embodiment 2 or of Embodiment 3, wherein the cycloaliphatic monoaldehydes **A1C** are selected from the group consisting of furfural (IUPAC name: furan-2-carbaldehyde), and 5-hydroxymethylfurfural (IUPAC name: 5-(hydroxymethyl)furan-2-carbaldehyde), and of mixtures of two or more of these.
Embodiment 7. The modified resins of Embodiment 2 or of Embodiment 3, wherein the cycloaliphatic dialdehydes **A2C** are selected from the group consisting of furane-2,5-dicarbaldehyde, and the isomeric 1,2-, 1,3-, and 1,4-cyclohexane dicarbaldehydes, and of mixtures of two or more of these.
Embodiment 8. The modified resins of Embodiment 2 or of Embodiment 3, wherein the phenolic bodies C are selected from the group consisting of phenol itself (hydroxybenzene), ortho-cresol, meta-cresol, para-cresol, 2,4-xylenol, 2,6-xylenol, and resorcinol, and combinations of two or more thereof.
Embodiment 9. The modified resins of Embodiment 2 or of Embodiment 3, wherein the aldehyde A is selected from the group consisting of formaldehyde, glyoxal, 5-hydroxymethylfurfural, and combinations of two or more thereof.
Embodiment 10. The modified resins of Embodiment 2 or of Embodiment 3, wherein the resinous oligomeric or polymeric phenolic materials **K** are selected from the group consisting of novolaks **N**, resoles **R,** polymers **PL** based on reaction products of aldehydes **A** with lignin **L,** polymers **PT** based on reaction products of aldehydes **A** with tannin **T,** and modified novolaks and resoles where at least a part of the phenols in the synthesis thereof has been replaced by lignin **L** or tannin **T** or other naturally occurring substituted phenols, or a mixture of two or more thereof.
Embodiment 11. The modified resins **M** of any one of Embodiments 1, 2, 3, or 10, wherein the aromatic diazonium compounds **B** having a diazonium group of formula -^{⊕}N≡N bound to an aromatic carbon atom, are selected from the group consisting of aromatic diazonium compounds **B** which carry no additional group, and of aromatic diazonium compounds **B** which carry at least one further functional group **F** which is selected from the group consisting of
   - hydroxyl groups -OH;
   - acid functional groups selected from the group consisting of carboxylic acid groups -C(O) - OH; sulphonic acid groups -S(O₂) - OH; phosphonic acid groups -P(O)(OH)₂;
   - linear or branched alkyl groups -Cₙ H₂ₙ₊₁ having from n = 1 to n = 20 carbon atoms;
   - linear or branched alkoxy groups -O-CₙH₂ₙ₊₁ having from n = 1 to n = 20 carbon atoms;
   - linear or branched alkoxycarboxy groups -C(O)-O-Cₙ H₂ₙ₊₁ having from n = 1 to n = 20 carbon atoms;
   - linear or branched alkylcarbonyl groups -C(O)-Cₙ H₂ₙ₊₁ having from n = 1 to n = 20 carbon atoms;
   - aryl groups having from six to twenty carbon atoms;
   - heteroaryl groups having from six to twenty carbon atoms and at least one hetero atom which is selected from the group consisting of oxygen -O-, sulphur -S-, nitrogen -N= or imine -N(H)-, where, in the case of two or more hetero atoms, these heteroatoms or heteroatom-containing groups, may be the same, or may be different from each other;
   - aldehyde groups -C(O)-H;
   - secondary amino groups 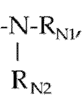 where R_{N1} and R_{N2} may be the same, or may be dif-I RN2 ferent from each other, and are independently selected from linear or branched alkyl groups -Cₙ H₂ₙ₊₁ having from n = 1 to n = 20 carbon atoms;
   - phosphate -O-P(O)(OR_{P})₂ groups, where the groups R_{P} may be the same, or may be different from each other, and are independently selected from linear or branched alkyl groups -Cₙ H₂ₙ₊₁ having from n = 1 to n = 20 carbon atoms;
   - phosphonate -P(O)(OR_{P})₂ groups, where the groups R_{P} may be the same, or may be different from each other, and are independently selected from linear or branched alkyl groups -Cₙ H₂ₙ₊₁ having from n = 1 to n = 20 carbon atoms;
   - cyanate -O-C=N groups;
   - cyano (nitrile) -C≡N groups;
   - nitro -NO₂ groups;
   - thiol -SH groups;
   - halogen -F, -Cl, -Br, -I groups;
   - (per)fluoroalkyl groups;
   - oligo-siloxane groups;
   - poly-siloxane groups; and
   - any combination of two or more thereof.
Embodiment 12. The modified resins **M** of Embodiment 11, wherein the aromatic diazonium compounds **B** having a diazonium group of formula -^{⊕}N≡N bound to an aromatic carbon atom are selected from the group consisting of ortho-, meta-, and para- aminobenzene sulphonic acids, aminonaphthalene sulphonic acids including naphthionic acid (1-aminonaphthalene-4-sulphonic acid), Laurent acid (1-aminonaphthalene-5-sulphonic acid), peri acid (1-aminonaphthalene-8-sulphonic acid), Tobias acid (2-aminonaphthalene-1-sulphonic acid), Dahl acid I (2-aminonaphthalene-5-sulphonic acid), Brönner acid (2-aminonaphthalene-6-sulphonic acid), Erdmann acid (2-aminonaphthalene-7-sulphonic acid), and aminocroceine acid (2-aminonaphthalene-8-sulphonic acid), aminonaphthalene disulphonic acids including Freund acids II and III (1-aminonaphthalene- 3,6-disulphonic acid and 1-aminonaphthalene- 3,7-disulphonic acid), amino epsilon acid (1-aminonaphthalene-3,8-disulphonic acid), Dahl acids II and III (1-aminonaphthalene-4,6-disulphonic acid and 1-aminonaphthalene-4,7-disulphonic acid), C acid (2-aminonaphthalene-4,8-disulphonic acid), amino G acid (2-aminonaphthalene-5,8-disulphonic acid), and further, the hydroxyaminosulphonic acid referred to as Böninger acid (1-aminonaphthalene-2-hydroxy-4-sulphonic acid), and the aminotrisulphonic acid "Koch acid" (1-aminonaphthalene-3,6,8-trisulphonic acid).
Embodiment 13. A method for the preparation of the modified resins **M** of Embodiment 1, with the steps of
   - preparing a solution in an aqueous acid, of an aromatic amine having optionally, at least one further functional group **F** which is selected from the group consisting of
      - hydroxyl groups -OH;
      - acid functional groups selected from the group consisting of carboxylic acid groups -C(O) - OH; sulphonic acid groups -S(O₂) - OH; phosphonic acid groups -P(O)(OH)₂;
      - linear or branched alkyl groups -Cₙ H₂ₙ₊₁ having from n = 1 to n = 20 carbon atoms;
      - linear or branched alkoxy groups -O-CₙH₂ₙ₊₁ having from n = 1 to n = 20 carbon atoms;
      - linear or branched alkoxycarboxy groups -C(O)-O-Cₙ H₂ₙ₊₁ having from n = 1 to n = 20 carbon atoms;
      - linear or branched alkylcarbonyl groups -C(O)-Cₙ H₂ₙ₊₁ having from n = 1 to n = 20 carbon atoms;
      - aryl groups having from six to twenty carbon atoms;
      - heteroaryl groups having from six to twenty carbon atoms and at least one hetero atom which is selected from the group consisting of oxygen -O-, sulphur -S-, nitrogen -N= or imine -N(H)-, where, in the case of two or more hetero atoms, these heteroatoms or heteroatom-containing groups, may be the same, or may be different from each other;
      - aldehyde groups -C(O)-H;
      - alkylamino groups 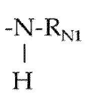 and dialkylamino groups 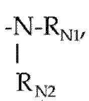 , where R_{N1} and R_{N2} may be the same, or may be different from each other, and are independently selected from linear or branched alkyl groups -Cₙ H₂ₙ₊₁ having from n = 1 to n = 20 carbon atoms;
      - phosphate -O-P(O)(OR_{P})₂ groups, where the groups R_{P} may be the same, or may be different from each other, and are independently selected from linear or branched alkyl groups -Cₙ H₂ₙ₊₁ having from n = 1 to n = 20 carbon atoms;
      - phosphonate -P(O)(OR_{P})₂ groups, where the groups R_{P} may be the same, or may be different from each other, and are independently selected from linear or branched alkyl groups -Cₙ H₂ₙ₊₁ having from n = 1 to n = 20 carbon atoms;
      - cyanate -O-C=N groups; cyano (nitrile) -C≡N groups;
      - nitro -NO₂ groups;
      - thiol -SH groups;
      - halogen -F, -Cl, -Br, -I groups;
      - (per)fluoroalkyl groups;
      - oligo-siloxane groups;
      - poly-siloxane groups,
   - cooling the solution of the first step to a temperature of 25 °C or less,
   - adding to the cooled solution of the second step, a solution of an alkali nitrite, and mixing the resulting combined solution at a temperature of 25 °C or less, and keeping the mixture until the nitrite is consumed and the reaction is completed, under formation of a diazonium compound **B,**
   - adding the mixture of the third step comprising a diazonium compound **B** to a solution or slurry of at least one oligomeric or polymeric phenolic material **K** having aromatic moieties with increased electron density in comparison with benzene at unsubstituted carbon atoms in the said aromatic moiety,
   wherein the quantity of the mixture of the third step is chosen such that the ratio *m*(**B**) / *m*(**K**) of the mass *m*(**B**) of aromatic diazonium compounds **B** to the mass *m*(**K**) of the resinous oligomeric or polymeric phenolic materials **K** can be chosen between 0.1 % and 50 %, preferably between 0.5 % and 35 %, and particularly preferred, between 1 % and 25 %.
Embodiment 14. A method of use of the modified resins **M** of Embodiment 1, or made according to Embodiment 13, as adhesives for composite wood materials, as binders for organic or inorganic fibre products, as binders for coatings, as binders in abrasive materials or in friction materials such as brake pads, in heat and sound insulation materials, as foams, or as foundry moulds.

### Figures

The results from the examples hereinafter are summarised in the attached figures.
- Fig.1: shows the high performance liquid chromatograms (HPLC) of the modified novolak N2 obtained in Example 2 (solid line) and of the unmodified Novolak N0 (dotted line),

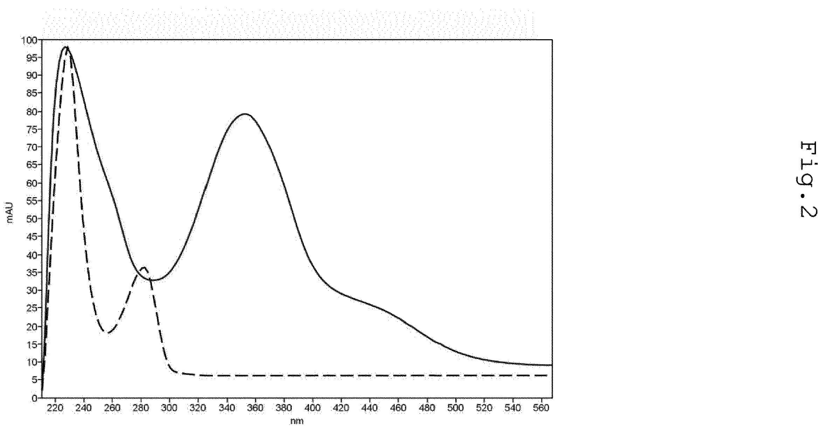

- Fig. 2: shows the UV-Vis spectra of the modified novolak N2 obtained in Example 2 (solid line) with the characteristic azobenzene absorption bands ππ*** and n*π** transition, and of the unmodified Novolak N0 (dashed line),
- Fig. 3: shows the high performance liquid chromatograms of the modified novolak N5 obtained in Example 5 (solid line) and of the unmodified Novolak N0 (dotted line),
- Fig. 4: shows the UV-Vis spectra of the modified novolak N5 obtained in Example 5 (solid line) and of the unmodified Novolak N0 (dashed line),
- Fig. 5: shows the high performance liquid chromatograms of the modified novolak N8 obtained in Example 8 (solid line) and of the unmodified Novolak N0 (dotted line),
- Fig. 6: shows the UV-Vis spectra of the modified novolak N8 obtained in Example 8 (solid line) with the characteristic azobenzene absorption bands ππ* and n*π** transition, compared to the unmodified Novolak N0 (dashed line),

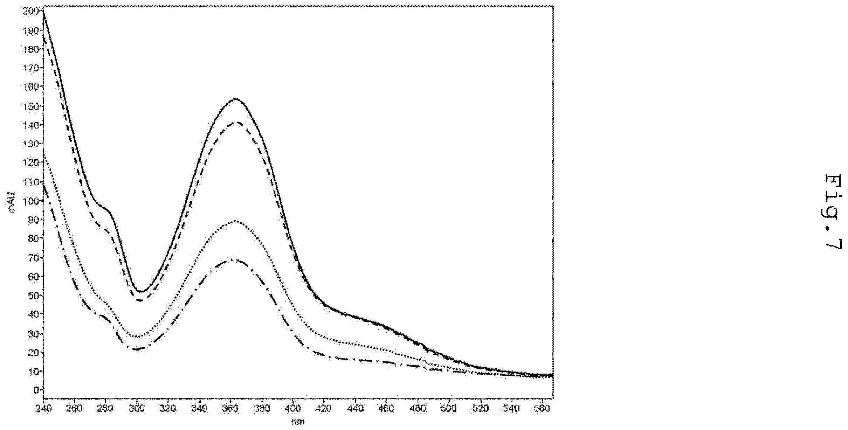

- Fig. 7: shows the UV-Vis spectra of seven different reaction products of the Novolak N11 separated in the HPLC, corresponding to individual peaks in the chromatogram differing in their retention times; the different heights of the additional characteristic azobenzene absorption bands (*ππ** and n*π** transition) in the UV-Vis spectra for the individual peaks in the chromatogram show that the different peaks correspond to species with different degrees of modification which have been separated in the chromatographic process, these species having different mass ratios of the mass *m*_{B} of modifier **B** to the mass *m*_{N0} of the novolak substrate N0 in the separated species of N11; the different mass ratio being the cause for the difference in absorbance,
- Fig. 8: shows the high performance liquid chromatograms of the modified novolak N12 obtained in Example 12 (solid line) and of the unmodified Novolak N0 (dotted line),

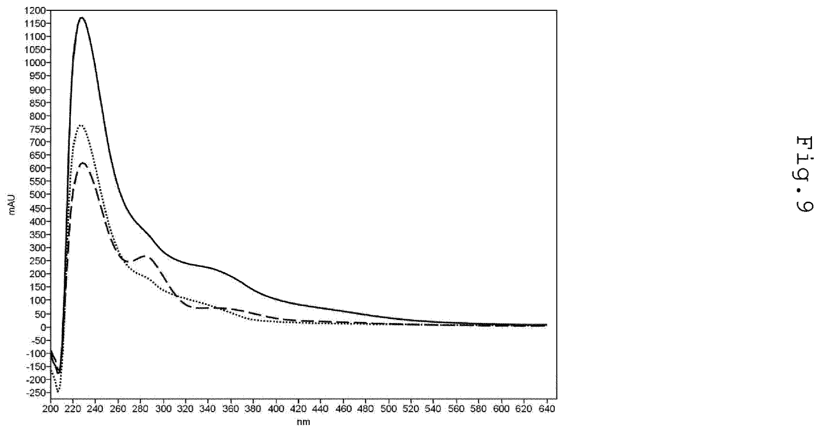

- Fig. 9: shows the UV-Vis spectra of two different reaction products of modified lignin separated in the HPLC, corresponding to individual retention times (72.5 min and 101.9 min in the chromatogram of the modified lignin) differing in their heights of the additional characteristic azobenzene absorption bands (*ππ** and n*π** transition) in the UV-vis, the different mass ratio being the cause for the difference in absorbance, compared to the UV-vis absorption spectrum of unmodified lignin taken at a retention time of 70.3 min, and

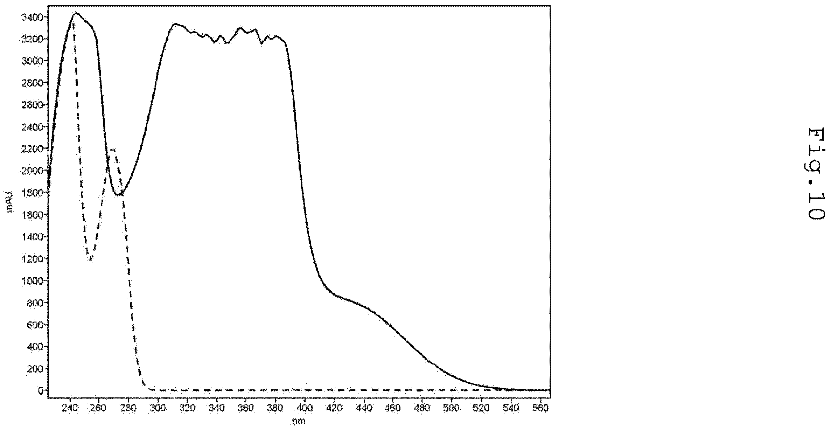

- Fig. 10: shows the UV-vis spectra of 3,4,5-trimethoxytoluene modified with the diazonium salt obtained in Example 1 (solid line) and that of the unmodified 3,4,5-trimethoxytoluene, as a model compound for sinapyl alcohol which is the precursor for syringyl groups in lignin; it is shown by the strong signal due to the characteristic azobenzene absorption bands (*ππ** and n*π** transition) that even this highly substituted aromatic ring can be successfully modified in an azo coupling reaction.

In all HPLC chromatograms, the abscissa is the retention time, measured in the unit "min" (minutes), and the signal shown in the ordinate is the light absorption as recorded by the UV-vis detector, in arbitrary units.

In all UV-vis spectra, the measured light absorption (arbitrary units, denoted as "mAU" in the ordinate) is recorded as a function of the wavelength of the incident light of the spectrophotometer, indicated in the unit "nm" (nanometre).

### Examples

### Example 1 Preparation of a Diazonium Compound from Aniline

0.175 g of aniline (1.88 mmol) were dissolved in aqueous hydrochloric acid (5 mL; *w*(HCl) = *m*(HCl)/m(solution) = 18.5 %; *ρ* = 1.0904 g/mL), and the resulting mixture was cooled in an ice bath to a temperature ϑ < 5 °C. An aqueous solution of 0.13 g of sodium nitrite (molar mass M = 68.995 g/mol; 1.88 mmol) in water having a concentration of 2 mol/L (137.99 g/L) was added slowly, keeping the temperature below 5 °C. Upon completion of the addition, the solution was stirred for fifteen further minutes and was directly used in the next Example.

### Example 2 Reaction of the Diazonium Compound of Example 1 with a Novolak

A novolak was prepared by charging 940 g of phenol, 9.4 g of oxalic acid, and 500 g of an aqueous solution of formaldehyde with a mass fraction of formaldehyde of 30 % to a resin kettle, and heating under reflux for three hours. Volatile substances were removed by heating, starting at normal pressure, and finally, under vacuum generated with a water jet pump, at temperatures up to 220 °C in the still. The free phenol content of this novolak corresponded to a mass fraction *w*(Ph) = *m*(Ph) / *m*(Novolak) = 0.05 %. This novolak is referred to as "N0" in the following examples.

1 g of this novolak N0 was dissolved at ambient temperature (20 °C) in 21 mL of an aqueous sodium hydroxide solution (having a concentration of 2 mol/L, corresponding to a mass fraction *w*(NaOH) = *m*(NaOH)/ *m*(Solution) of 79.994 g/1086 g = 7.37 %, with the density of the solution at this temperature being 1086 kg/m³). The novolak solution was then cooled in an ice bath to 5 °C, and the diazonium salt solution of Example 1 was added dropwise, under formation of a reddish precipitate in the stirred solution. When the addition was completed, the reaction mixture was stirred at room temperature (20 °C) for a further hour. The reddish suspension was admixed to 50 mL of a dilute aqueous solution of hydrochloric acid (mass fraction *w*(HCl) = *m*(HCl) / m(Solution) = 4 g / 50 g = 8 % = 80 g/kg), the precipitate was separated by filtration, and rinsed with water. The resulting solids were dried and tested via high pressure liquid chromatography (HPLC).

### Example 3 HPLC analysis

A sample of 50 mg of the modified novolak N2 obtained in Example 2 was suspended in a mixture of water and tetrahydrofuran (in a mass ratio of 3:7), the suspension was homogenised during ten minutes in an ultrasonic bath at ambient temperature (20 °C). The resulting homogenised suspension was transferred via a syringe filter to a chromatography vial, and the clear filtrate was analysed in a HPLC-UV/vis system, using a gradient mixture of solvent A and solvent B, with the following conditions:

| | |
|---|---|
| solvent A: | aqueous solution of lithium formate, 0.05 mol/L, pH = 3.8 |
| solvent B: | tetrahydrofuran (THF) |
| eluent: | gradient, from 95 % A to 100 % B (at t₀ = 0 min, where the mass fraction of solvent B is 5 %, to t₁₀₀ = 107 min) |
| flow: | 0.3 mL/min |
| column: | reverse phase (C18) |
| detector: | UV/vis, 200 nm to 600 nm |

For comparison, a sample of the unmodified novolak N0 was prepared in the same way as detailed above, and also subjected to HPLC analysis.

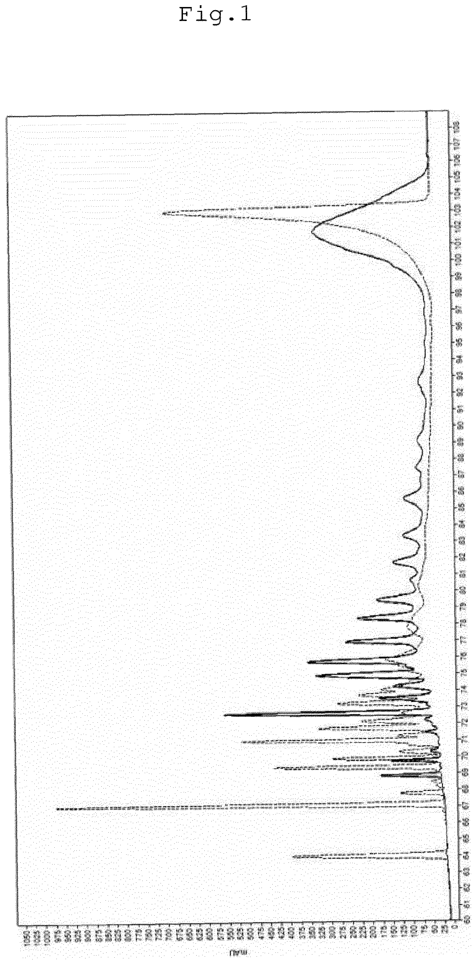

The HPLC chromatograms are shown in Fig. 1; as can be seen, the retention times of novolak N2 obtained in example 2 (solid line) modified by additional phenyl groups from the diazonium salt derived from aniline (prepared in Example 1) are shifted towards longer retention times with regard to the unmodified novolak N0 (dotted line). The individual peaks shown in the left part of the chromatogram correspond to oligomers having different degrees of polymerisation.

UV-Vis spectra of both novolaks N0 and N2 were recorded, the additional characteristic azobenzene absorption bands (*ππ** and n*π** transition) can be seen in the spectrum of Novolak N2.

### Example 4 Preparation of a Diazonium Compound from Sulfanilic Acid (4-Aminobenzene Sulphonic Acid)

0.326 g of sulfanilic acid (1.88 mmol) were dissolved in aqueous hydrochloric acid (5 mL; *w*(HCl) = *m*(HCl)/*m*(solution) = 18.5 %; *ρ* = 1.0904 g/mL), and the resulting mixture was cooled in an ice bath to a temperature ϑ < 5 °C. An aqueous solution of 0.13 g of sodium nitrite (molar mass M = 68.995 g/mol; 1.88 mmol) in water having a concentration of 2 mol/L (137.99 g/L) was added slowly, keeping the temperature below 5 °C. Upon completion of the addition, the solution was stirred for fifteen further minutes and was directly used in the next Example.

### Example 5 Reaction of the Diazonium Compound of Example 4 with a Novolak

1 g of the novolak N0 as prepared in the first part of Example 2 was dissolved at ambient temperature (20 °C) in 21 mL of an aqueous sodium hydroxide solution (having a concentration of 2 mol/L, corresponding to a mass fraction *w*(NaOH) = *m*(NaOH)/ *m*(Solution) of 79.994 g/1086 g = 7.37 %, with the density of the solution at this temperature being 1086 kg/m³ = 1.086 g/cm³). The novolak solution was then cooled in an ice bath to 5 °C, and the diazonium salt solution of Example 4 was added dropwise, under formation of a reddish precipitate in the stirred solution. When the addition was completed, the reaction mixture was stirred at room temperature (20 °C) for a further hour. The reddish suspension was admixed to 50 mL of a dilute aqueous solution of hydrochloric acid (mass fraction *w*(HCl) = *m*(HCl) / m(Solution) = 8 %), the precipitate was separated by filtration, and rinsed with water. The resulting solids were dried and tested via high pressure liquid chromatography.

### Example 6 HPLC analysis

A sample of 50 mg of the modified novolak N5 obtained in Example 5 was suspended in a mixture of water and tetrahydrofuran (in a mass ratio of 3:7), the suspension was homogenised during ten minutes in an ultrasonic bath at ambient temperature (20 °C). The resulting homogenised suspension was transferred via a syringe filter to a chromatography vial, and the clear filtrate was analysed in a HPLC-UV/vis system, with the following conditions:

| | |
|---|---|
| solvent A: | aqueous solution of lithium formate, 0.05 mol/L, pH = 3.8 |
| solvent B: | tetrahydrofuran (THF) |
| eluent: | gradient, from 95 % A to 100 % B (at t₀ = 0 min, where the mass fraction of |
| | solvent B is 5 %, to t₁₀₀ = 107 min) |
| flow: | 0.3 mL/min |
| column: | reverse phase (C18) |
| detector: | UV/vis, 200 nm to 600 nm |

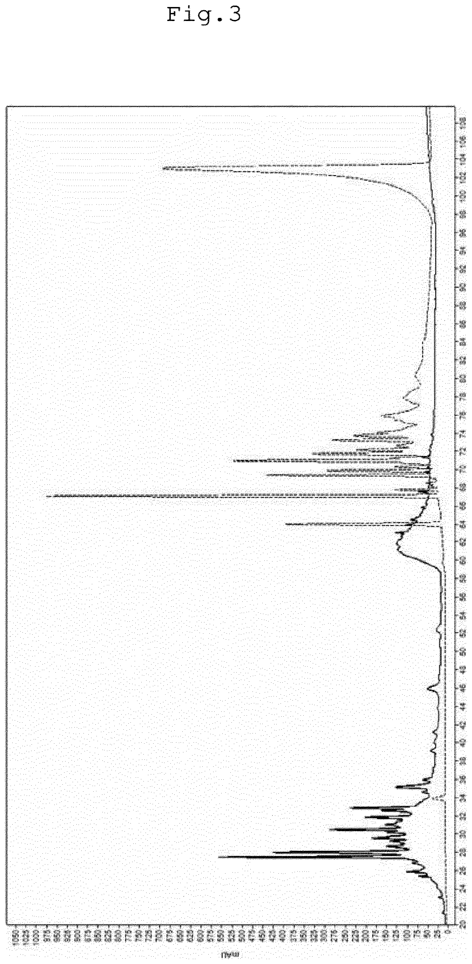

For comparison, a sample of the unmodified novolak N0 was prepared in the same way as detailed above, and also subjected to HPLC analysis. The chromatograms are shown in Fig. 3; as can be seen, the retention times of novolak N5 obtained in example 5 modified by additional phenyl-4-sulphonic acid groups from the diazonium salt derived from sulfanilic acid (prepared in Example 4) are shifted towards shorter retention times with regard to the unmodified novolak N0, meaning that the modified novolak N5 is more hydrophilic than the unmodified novolak N0. The individual peaks shown in the left part of the chromatogram correspond to oligomers having different degrees of polymerisation.

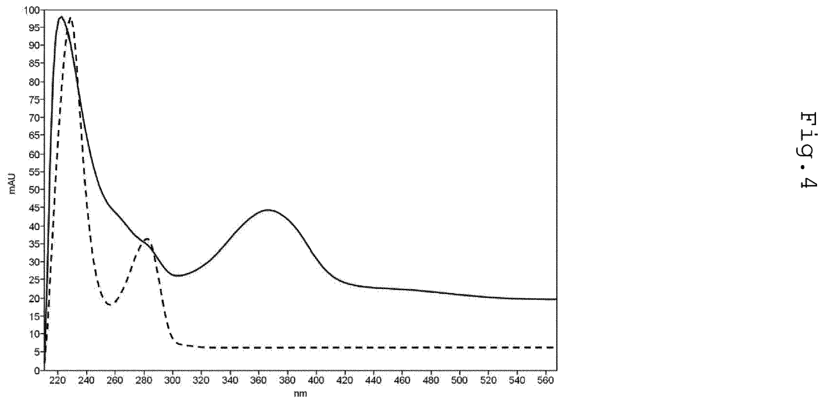

UV-Vis spectra of both novolaks N0 and N5 were recorded (Fig. 4), the additional characteristic azobenzene absorption bands (*ππ** and n*π** transition) can be seen in the spectrum of Novolak N5.

### Example 7 Preparation of a Diazonium Compound from Cleve's Acid-1,6 (1-Aminonaphthalene-6-sulphonic Acid, 5-Amino-2-naphthalenesulphonic Acid)

0.420 g of 1-aminonaphthalene-6-sulphonic acid (1.88 mmol) were dissolved in aqueous hydrochloric acid (5 mL; *w*(HCl) = *m*(HCl)/*m*(solution) = 18.5 %; *ρ* = 1.0904 g/mL), and the resulting mixture was cooled in an ice bath to a temperature ϑ < 5 °C. An aqueous solution of 0.13 g of sodium nitrite (molar mass M = 68.995 g/mol; 1.88 mmol) in water having a concentration of 2 mol/L (137.99 g/L) was added slowly, keeping the temperature below 5 °C. Upon completion of the addition, the solution was stirred for fifteen further minutes and was directly used in the next Example.

### Example 8 Reaction of the Diazonium Compound of Example 7 with a Novolak

1 g of the novolak N0 as prepared in the first part of Example 2 was dissolved at ambient temperature (20 °C) in 21 mL of an aqueous sodium hydroxide solution (having a concentration of 2 mol/L, corresponding to a mass fraction *w*(NaOH) = *m*(NaOH)/ *m*(Solution) of 79.994 g/1086 g = 7.37 %, with the density of the solution at this temperature being 1086 kg/m³ = 1.086 g/cm³). The novolak solution was then cooled in an ice bath to 5 °C, and the diazonium salt solution of Example 7 was added dropwise, under formation of a reddish precipitate in the stirred solution. When the addition was completed, the reaction mixture was stirred at room temperature (20 °C) for a further hour. The reddish suspension was admixed to 50 mL of a dilute aqueous solution of hydrochloric acid (mass fraction *w*(HCl) = *m*(HCl) / m(Solution) = 8 %), the precipitate was separated by filtration, and rinsed with water. The resulting solids were dried and tested via high pressure liquid chromatography.

### Example 9 HPLC analysis

A sample of 50 mg of the modified novolak N8 obtained in Example 8 was suspended in a mixture of water and tetrahydrofuran (in a mass ratio of 3:7), the suspension was homogenised during ten minutes in an ultrasonic bath at ambient temperature (20 °C). The resulting homogenised suspension was transferred via a syringe filter to a chromatography vial, and the clear filtrate was analysed in a HPLC-UV/vis system, with the following conditions:

| | |
|---|---|
| solvent A: | aqueous solution of lithium formate, 0.05 mol/L, pH = 3.8 |
| solvent B: | tetrahydrofuran (THF) |
| eluent: | gradient, from 95 % A to 100 % B (at t₀ = 0 min, where the mass fraction of solvent B is 5 %, to t₁₀₀ = 107 min) |
| flow: | 0.3 mL/min |
| column: | reverse phase (C18) |
| detector: | UV/vis, 200 nm to 600 nm |

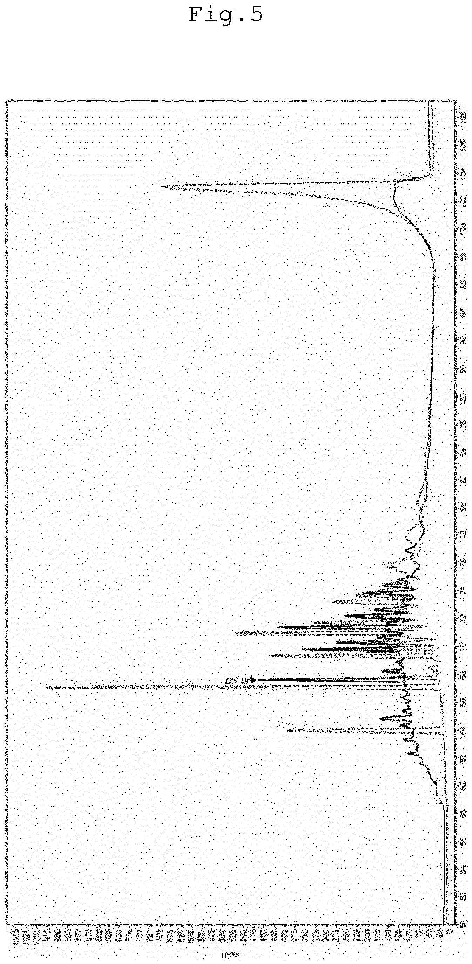

For comparison, a sample of the unmodified novolak N0 was prepared in the same way as detailed above, and also subjected to HPLC analysis. The chromatograms are shown in Fig. 5; as can be seen, the retention times of novolak N8 obtained in example 8 modified by additional naphthalyl-sulphonic acid groups from the diazonium salt derived from Cleve's acid 1,6 (prepared in Example 7) show only a little shifted of the retention times with regard to the unmodified novolak N0, meaning that the modified novolak N8 has approximately the same hydrophilicity as the unmodified novolak N0, due to the contrary effects of the naphthalene group (shift to less hydrophilic) and of the sulphonic acid group (shift to more hydrophilic). The individual peaks shown in the left part of the chromatogram correspond to oligomers having different degrees of polymerisation.

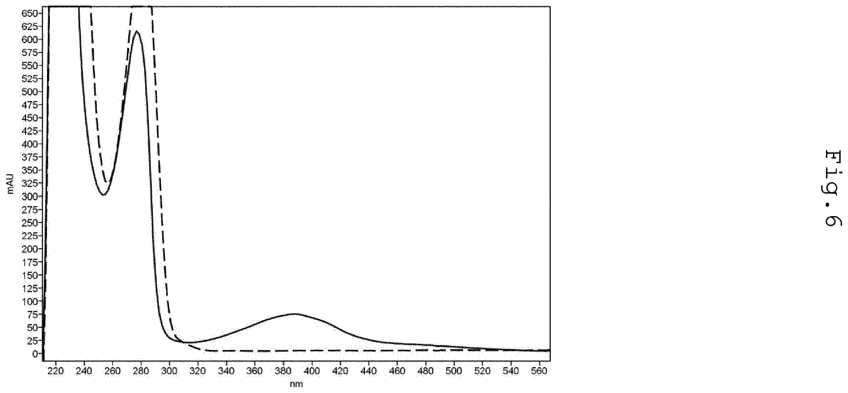

UV-Vis spectra of both novolaks N0 and N8 were recorded (Fig. 6), the additional characteristic azobenzene absorption bands (*ππ** and n*π** transition) can be seen in the spectrum of Novolak N8.

### Example 10 Preparation of a Diazonium Compound from 3-Aminophenol

0.205 g of 3-aminophenol (1.88 mmol) were dissolved in aqueous hydrochloric acid (5 mL; *w*(HCl) = *m*(HCl)/*m*(solution) = 18.5 %; ρ = 1.0904 g/mL), and the resulting mixture was cooled in an ice bath to a temperature ϑ < 5 °C. An aqueous solution of 0.13 g of sodium nitrite (molar mass M = 68.995 g/mol; 1.88 mmol) in water having a concentration of 2 mol/L (137.99 g/L) was added slowly, keeping the temperature below 5 °C. Upon completion of the addition, the solution was stirred for fifteen further minutes and was directly used in the next Example.

### Example 11 Reaction of the Diazonium Compound of Example 10 with a Novolak

1 g of the novolak N0 as prepared in the first part of Example 2 was dissolved at ambient temperature (20 °C) in 21 mL of an aqueous sodium hydroxide solution (having a concentration of 2 mol/L, corresponding to a mass fraction *w*(NaOH) = *m*(NaOH)/ *m*(Solution) of 79.994 g/1086 g = 7.37 %, with the density of the solution at this temperature being 1086 kg/m³ = 1.086 g/cm³). The novolak solution was then cooled in an ice bath to 5 °C, and the diazonium salt solution of Example 10 was added dropwise under formation of a reddish precipitate in the stirred solution. When the addition was completed, the reaction mixture was stirred at room temperature (20 °C) for a further hour. The reddish suspension was admixed to 50 mL of a dilute aqueous solution of hydrochloric acid (mass fraction *w*(HCl) = *m*(HCl) / m(Solution) = 8 %), the precipitate was separated by filtration, and rinsed with water. The resulting solids were dried and tested by HPLC as described supra. The UV-vis spectra of seven different reaction products of the Novolak N11 separated in the HPLC, corresponding to individual peaks in the chromatogram differing in their retention times, are shown in Fig. 7. The different heights of the additional characteristic azobenzene absorption bands (*ππ** and n*π** transition) in the UV-Vis spectra for the individual peaks in the chromatogram show that the different peaks correspond to species with different degrees of modification which have been separated in the chromatographic process, which have different mass ratios of the mass *m*_{B} of modifier **B** to the mass *m*_{N0} of the novolak substrate N0 in the separated species. The different mass ratio is the cause for the difference in absorbance.

### Example 12 Reaction of the Diazonium Compound of Example 1 with Lignin

1.84 g of lignin was dissolved at ambient temperature (20 °C) in 37 mL of an aqueous sodium hydroxide solution (having a concentration of 2 mol/L, corresponding to a mass fraction *w*(NaOH) = *m*(NaOH)/ *m*(Solution) of 79.994 g/1086 g = 7.37 %, with the density of the solution at this temperature being 1086 kg/m³ = 1.086 g/cm³). The lignin solution was then cooled in an ice bath to 5 °C, and the diazonium salt solution of Example 4 was added dropwise, under formation of a dark brown precipitate in the stirred solution. When the addition was completed, the reaction mixture was stirred at room temperature (20 °C) for a further hour. The dark brown suspension was admixed to 50 mL of a dilute aqueous solution of hydrochloric acid (mass fraction w(HCl) = m(HCl) / m(Solution) = 8%), the precipitate was separated by filtration, and rinsed with water. The resulting solids were dried and tested via high pressure liquid chromatography.

### Example 13 HPLC analysis

A sample of 50 mg of the modified lignin obtained in Example 12 was suspended in a mixture of water and tetrahydrofuran (in a mass ratio of 3 : 7), the suspension was homogenised during ten minutes in an ultrasonic bath at ambient temperature (20 °C). The resulting homogenised suspension was transferred via a syringe filter to a chromatography vial, and the clear filtrate was analysed in a HPLC-UV/vis system, with the following conditions:

| | |
|---|---|
| solvent A: | aqueous solution of lithium formate, 0.05 mol/L, pH = 3.8 |
| solvent B: | tetrahydrofuran (THF) |
| eluent: | gradient, from 95 % A to 100 % B (at t₀ = 0 min, where the mass fraction of solvent B is 5 %, to t₁₀₀ = 107 min) |
| flow: | 0.3 mL/min |
| column: | reverse phase (C18) |
| detector: | UV/vis, 200 nm to 600 nm |

For comparison, a sample of the unmodified lignin was prepared in the same way as detailed above, and also subjected to HPLC analysis.

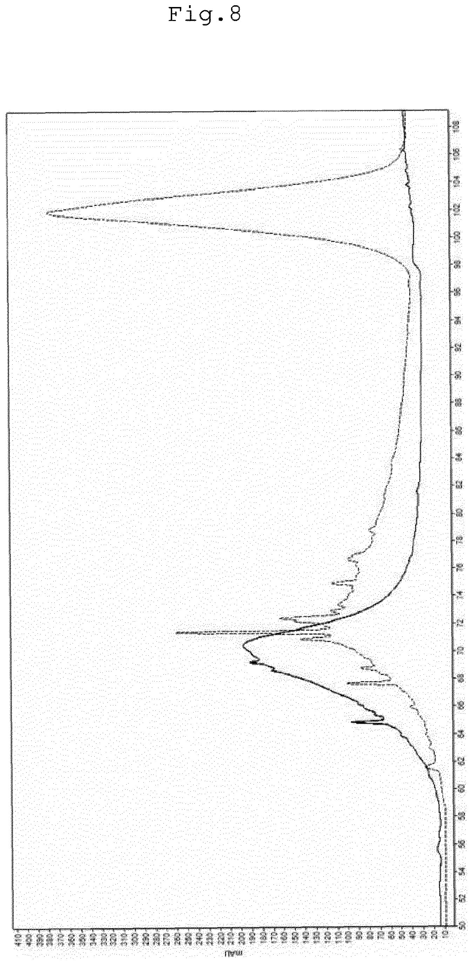

The chromatograms are shown in Fig. 8 ; as can be seen, the retention times of the modified lignin of example 12 which was modified by additional phenyl groups from the diazonium salt derived from aniline (prepared in Example 1) are shifted towards longer retention times with regard to the unmodified lignin.

### Example 14 Reaction of the Diazonium Compound of Example 1 with 3,4,5-Trimethoxytoluene

0.91 g of 3,4,5-trimethoxytoluene (as a model compound for lignin) and 0.44 g of pyridine were dissolved at ambient temperature (20 °C) in 15 mL of acetonitrile. The 3,4,5-trimethoxytoluene solution was then cooled in an ice bath to 5 °C, and the diazonium salt solution of Example 1 was added dropwise, under formation of a yellow to orange colour. When the addition was completed, the reaction mixture was stirred at room temperature (20 °C) for a further hour. The dark orange solution was admixed to 50 mL of a dilute aqueous solution of hydrochloric acid (mass fraction w(HCl) = m(HCl) / m(Solution) = 4 g/50 g = 8%), the separating oil was separated by decantation. The resulting dark orange liquid was tested via high pressure liquid chromatography.

### Example 15 HPLC analysis

A sample of 50 mg of the modified 3,4,5-trimethoxytoluene obtained in Example 14 was dissolved in a mixture of water and tetrahydrofuran (in a mass ratio of 3:7 at ambient temperature (20 °C). The resulting solution was transferred via a syringe filter to a chromatography vial, and the clear filtrate was analysed in a HPLC-UV/vis system, with the following conditions:

| | |
|---|---|
| solvent A: | aqueous solution of lithium formate, 0.05 mol/L, pH = 3.8 |
| solvent B: | tetrahydrofuran (THF) |
| eluent: | gradient, from 95 % A to 100 % B (at t₀ = 0 min, where the mass fraction of solvent B is 5 %, to t₁₀₀ = 107 min) |
| flow: | 0.3 mL/min |
| column: | reverse phase (C18) |
| detector: | UV/vis, 200 nm to 600 nm |

In similar experiments, arylamines have been prepared with one or more than one additional substituents on the aromatic ring(s) selected from the group consisting of hydroxyl groups, linear or branched alkyl groups -Cₙ H₂ₙ₊₁ having from n = 1 to n = 20 carbon atoms, preferably methyl, ethyl, n-propyl, isopropyl, n-butyl, tert.-butyl, n-hexyl, n-octyl, n-nonyl, n-dodecyl, and stearyl, hydroxyl groups, linear or branched alkoxy groups -O-CₙH₂ₙ₊₁ having from n = 1 to n = 20 carbon atoms, preferably methoxy, ethoxy, n-propoxy, isopropoxy, n-butoxy, tert.-butyoxy, n-hexoxy, n-octoxy, n-nonoxy, n-dodecoxy, and stearoxy, linear or branched alkoxycarboxy groups -C(O)-O-Cₙ H₂ₙ₊₁ having from n = 1 to n = 20 carbon atoms, preferably methoxycarboxy, ethoxycarboxy, n-propoxycarboxy, isopropoxycarboxy, n-butoxycarboxy, tert.-butyoxycarboxy, n-hexoxycarboxy, n-octoxycarboxy, n-nonoxycarboxy, n-dodecoxy-carboxy, and stearoxycarboxy, linear or branched alkylcarbonyl groups -C(O)-CₙH₂ₙ₊₁ having from n = 1 to n = 20 carbon atoms, preferably methylcarbonyl, ethylcarbonyl, n-propylcarbonyl, isopropylcarbonyl, n-butylcarbonyl, tert.-butylcarbonyl, n-hexylcarbonyl, n-octylcarbonyl, n-nonylcarbonyl, n-dodecylcarbonyl, and stearylcarbonyl, aryl groups having from six to twenty carbon atoms, preferably phenyl, 1- and 2-naphthyl, 1-, 2-, or 9-anthracenyl, heteroaryl groups having from six to twenty carbon atoms and at least one hetero atom which is selected from the group consisting of oxygen -O-, sulphur -S-, nitrogen -N= or imine -N(H)-, which, in the case of two or more hetero atoms, these may be the same, or may be different from each other, preferably furan-2-yl, or -3-yl, thiophen-2-yl, or -3-yl, pyrrol-2-yl, or -3-yl, pyrazol-3-yl, -4-yl, or -5-yl, imidazole-2-yl, -4-yl, or -5-yl, 1,2,3-triazole-4-yl, or -5-yl, 1,2,4-triazole-3-yl, or-5-yl, isoxazole-3-yl, -4-yl, or -5-yl, oxazole-2-yl, -4-yl, or -5-yl, isothiazole-3-yl, -4-yl, or -5-yl, thiazole-2-yl, -4-yl, or -5-yl, pyridine-2-yl, -3-yl, or -4-yl, pyridazine-3-yl, or-4-yl, pyrimidine-2-yl, -4-yl, or -5-yl, pyrazine-2-yl, 1,3,5-triazine-2-yl, 1,2,4-triazine-2-yl, -5-yl or -6-yl, 1,2,3-triazine-4-yl or -5-yl, alkylamino groups 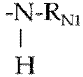 and dialkyl amino groups 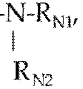 where R_{N1} and R_{N2} may be the same, or may be different from each other, and are independently selected from linear or branched alkyl groups -Cₙ H₂ₙ₊₁ having from n = 1 to n = 20 carbon atoms, preferably methyl, ethyl, n-propyl, isopropyl, n-butyl, tert.-butyl, n-hexyl, n-octyl, n-nonyl, n-dodecyl, and stearyl; phosphate -O-P(O)(OR_{P})₂ groups, where the groups R_{P} may be the same, or may be different from each other, and are independently selected from H, linear or branched alkyl groups -Cₙ H₂ₙ₊₁ having from n = 1 to n = 20 carbon atoms, preferably methyl, ethyl, n-propyl, isopropyl, n-butyl, tert.-butyl, n-hexyl, n-octyl, n-nonyl, n-dodecyl, and stearyl; aldehyde groups -C(O)-H; phosphonate -P(O)(OR_{P})₂ groups, where the groups R_{P} may be the same, or may be different from each other, and are independently selected from H, linear or branched alkyl groups -Cₙ H₂ₙ₊₁ having from n = 1 to n = 20 carbon atoms, preferably methyl, ethyl, n-propyl, isopropyl, n-butyl, tert.-butyl, n-hexyl, n-octyl, n-nonyl, n-dodecyl, and stearyl; cyanate -O-C≡N groups, nitro -NO₂ groups, thiol -SH groups, halogen -F, -Cl, -Br, -I groups; nitrile groups -C=N; (per)fluoroalkyl groups, preferably pentafluoroethyl, hexafluoroisopropyl, and enneafluorbutyl, and oligo- and poly-siloxane groups.

For the siloxane groups, it has shown to be preferable to introduce phenolic hydroxyl groups or (aromatic) amino groups by the azo-coupling step, and react these intermediates in a second step with reactive siloxane reagents such as epoxy-functional or anhydride-functional silicones, or to introduce epoxy groups or anhydride groups by the azo-coupling step, and react these intermediates with reactive siloxane reagents such as mercapto -functional silicones or amino-functional silicones. Depending on their chemical nature, these groups are hydrophilic or hydrophobic, and add a further functionality to the diazonium group-containing modifiers **B,** and thus change the physicochemical properties of the resins **M** so modified, e. g., hydrophilicity or hydrophobicity, cohesion and adhesion properties, solubility, light and chemical resistance, and chemical reactivity.

It has been possible to treat surfaces coated with phenolic resins PF and modified phenolic resins MPF as defined supra with these diazonium group-containing modifiers **B.** Such treatment has led to modified surface properties including non-wetting surfaces, or surfaces having improved chemical and solvent resistance.

## Claims

1. Modified resins **M** based on resinous oligomeric or polymeric phenolic materials **K,** where aromatic diazonium compounds **B** having a diazonium group of formula -^{⊕}N≡N bound to an aromatic carbon atom, which aromatic diazonium compounds **B** either carry no additional functional group, or carry at least one further functional group **F** which is capable of modifying the reactivity, solubility, or phase interface properties of the modified resins **M,** are coupled to the said phenolic materials **K** via an azo coupling reaction.

2. The modified resins **M** of claim 1, wherein the resinous oligomeric or polymeric phenolic materials **K** are prepared by reaction of phenolic bodies **C** with aldehydes **A,** wherein the aldehydes are selected from the group consisting of aliphatic monoaldehydes **A1A,** cycloaliphatic monoaldehydes **A1C,** aliphatic dialdehydes **A2A,** and cycloaliphatic dialdehydes **A2C,** and of mixtures of two or more of these.

3. The modified resins **M** of claim 1 or of claim 2, wherein the resinous oligomeric or polymeric phenolic materials **K** are prepared by reaction of phenolic bodies **C** with aldehydes A, wherein the phenolic bodies **C** are selected from the group consisting of mononuclear monohydroxy aromatic compounds **C11,** mononuclear aromatic compounds **C12** having at least two hydroxyl groups bound to an aromatic carbon atom, multinuclear monohydroxy aromatic compounds **CM1,** and multinuclear aromatic compounds **CM2** having at least two hydroxyl groups bound to an aromatic carbon atom.

4. The modified resins of claim 2 or of claim 3, wherein the aliphatic monoaldehydes **A1A** are selected from the group consisting of formaldehyde, acetaldehyde, propanal, n-butanal, 2-methyl-n-butanal, n-pentanal, and methylglyoxal (2-oxopropanal), and of mixtures of two or more of these.

5. The modified resins of claim 2 or of claim 3, wherein the aliphatic dialdehydes **A2A** are selected from the group consisting of glyoxal, malondialdehyde, succindialdehyde, glutardialdehyde, and adipaldehyde, and of mixtures of two or more of these.

6. The modified resins of claim 2 or of claim 3, wherein the cycloaliphatic monoaldehydes **A1C** are selected from the group consisting of furfural (IUPAC name: furan-2-carbaldehyde), and 5-hydroxymethylfurfural (IUPAC name: 5-(hydroxymethyl)furan-2-carbaldehyde), and of mixtures of two or more of these.

7. The modified resins of claim 2 or of claim 3, wherein the cycloaliphatic dialdehydes **A2C** are selected from the group consisting of furane-2,5-dicarbaldehyde, and the isomeric 1,2-, 1,3-, and 1,4-cyclohexane dicarbaldehydes, and of mixtures of two or more of these.

8. The modified resins of claim 2 or of claim 3, wherein the phenolic bodies **C** are selected from the group consisting of phenol itself (hydroxybenzene), ortho-cresol, meta-cresol, para-cresol, 2,4-xylenol, 2,6-xylenol, and resorcinol, and combinations of two or more thereof.

9. The modified resins of claim 2 or of claim 3, wherein the aldehyde **A** is selected from the group consisting of formaldehyde, glyoxal, 5-hydroxymethylfurfural, and combinations of two or more thereof.

10. The modified resins of claim 2 or of claim 3, wherein the resinous oligomeric or polymeric phenolic materials **K** are selected from the group consisting of novolaks **N**, resoles **R,** polymers **PL** based on reaction products of aldehydes **A** with lignin **L,** polymers **PT** based on reaction products of aldehydes **A** with tannin **T,** and modified novolaks and resoles where at least a part of the phenols in the synthesis thereof has been replaced by lignin **L** or tannin **T** or other naturally occurring substituted phenols, or a mixture of two or more thereof.

11. The modified resins **M** of any one of claims 1, 2, 3, or 10, wherein the aromatic diazonium compounds **B** having a diazonium group of formula -^{⊕}N≡N bound to an aromatic carbon atom, are selected from the group consisting of aromatic diazonium compounds **B** which carry no additional group, and of aromatic diazonium compounds **B** which carry at least one further functional group **F** which is selected from the group consisting of
- hydroxyl groups -OH;
- acid functional groups selected from the group consisting of carboxylic acid groups -C(O) - OH; sulphonic acid groups -S(O₂) - OH; phosphonic acid groups -P(O)(OH)₂;
- linear or branched alkyl groups -Cₙ H₂ₙ₊₁ having from n = 1 to n = 20 carbon atoms;
- linear or branched alkoxy groups -O-CₙH₂ₙ₊₁ having from n = 1 to n = 20 carbon atoms;
- linear or branched alkoxycarboxy groups -C(O)-O-Cₙ H₂ₙ₊₁ having from n = 1 to n = 20 carbon atoms;
- linear or branched alkylcarbonyl groups -C(O)-Cₙ H₂ₙ₊₁ having from n = 1 to n = 20 carbon atoms;
- aryl groups having from six to twenty carbon atoms;
- heteroaryl groups having from six to twenty carbon atoms and at least one hetero atom which is selected from the group consisting of oxygen -O-, sulphur -S-, nitrogen -N= or imine -N(H)-, where, in the case of two or more hetero atoms, these heteroatoms or heteroatom-containing groups, may be the same, or may be different from each other;
- aldehyde groups -C(O)-H;
- secondary amino groups 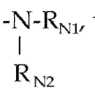 where R_{N1} and R_{N2} may be the same, or may be different from each other, and are independently selected from linear or branched alkyl groups -Cₙ H₂ₙ₊₁ having from n = 1 to n = 20 carbon atoms;
- phosphate -O-P(O)(OR_{P})₂ groups, where the groups R_{P} may be the same, or may be different from each other, and are independently selected from linear or branched alkyl groups -Cₙ H₂ₙ₊₁ having from n = 1 to n = 20 carbon atoms;
- phosphonate -P(O)(OR_{P})₂ groups, where the groups R_{P} may be the same, or may be different from each other, and are independently selected from linear or branched alkyl groups -Cₙ H₂ₙ₊₁ having from n = 1 to n = 20 carbon atoms;
- cyanate -O-C≡N groups; cyano (nitrile) -C≡N groups;
- nitro -NO₂ groups;
- thiol -SH groups;
- halogen -F, -Cl, -Br, -I groups;
- (per)fluoroalkyl groups;
- oligo-siloxane groups;
- poly-siloxane groups; and
- any combination of two or more thereof.

12. The modified resins **M** of claim 11, wherein the aromatic diazonium compounds **B** having a diazonium group of formula -^{⊕}N≡N bound to an aromatic carbon atom are selected from the group consisting of ortho-, meta-, and para- aminobenzene sulphonic acids, aminonaphthalene sulphonic acids including naphthionic acid (1-aminonaphthalene-4-sulphonic acid), Laurent acid (1-aminonaphthalene-5-sulphonic acid), peri acid (1-aminonaphthalene-8-sulphonic acid), Tobias acid (2-aminonaphthalene-1-sulphonic acid), Dahl acid I (2-aminonaphthalene-5-sulphonic acid), Brönner acid (2-aminonaphthalene-6-sulphonic acid), Erdmann acid (2-aminonaphthalene-7-sulphonic acid), and aminocroceine acid (2-aminonaphthalene-8-sulphonic acid), aminonaphthalene disulphonic acids including Freund acids II and III (1-aminonaphthalene- 3,6-disulphonic acid and 1-aminonaphthalene- 3,7-disulphonic acid), amino epsilon acid (1-aminonaphthalene-3,8-disulphonic acid), Dahl acids II and III (1-aminonaphthalene-4,6-disulphonic acid and 1-aminonaphthalene-4,7-disulphonic acid), C acid (2-aminonaphthalene-4,8-disulphonic acid), amino G acid (2-aminonaphthalene-5,8-disulphonic acid), and further, the hydroxyaminosulphonic acid referred to as Böninger acid (1-aminonaphthalene-2-hydroxy-4-sulphonic acid), and the aminotrisulphonic acid "Koch acid" (1-aminonaphthalene-3,6,8-trisulphonic acid).

13. A method for the preparation of the modified resins **M** of claim 1, with the steps of
- preparing a solution in an aqueous acid, of an aromatic amine having optionally, at least one further functional group **F** which is selected from the group consisting of
- hydroxyl groups -OH;
- acid functional groups selected from the group consisting of carboxylic acid groups -C(O) - OH; sulphonic acid groups -S(O₂) - OH; phosphonic acid groups -P(O)(OH)₂;
- linear or branched alkyl groups -Cₙ H₂ₙ₊₁ having from n = 1 to n = 20 carbon atoms;
- linear or branched alkoxy groups -O-CₙH₂ₙ₊₁ having from n = 1 to n = 20 carbon atoms;
- linear or branched alkoxycarboxy groups -C(O)-O-Cₙ H₂ₙ₊₁ having from n = 1 to n = 20 carbon atoms;
- linear or branched alkylcarbonyl groups -C(O)-Cₙ H₂ₙ₊₁ having from n = 1 to n = 20 carbon atoms;
- aryl groups having from six to twenty carbon atoms;
- heteroaryl groups having from six to twenty carbon atoms and at least one hetero atom which is selected from the group consisting of oxygen -O-, sulphur -S-, nitrogen -N= or imine -N(H)-, where, in the case of two or more hetero atoms, these heteroatoms or heteroatom-containing groups, may be the same, or may be different from each other;
- aldehyde groups -C(O)-H;
- alkylamino groups 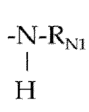 and dialkylamino groups 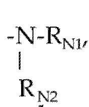 , where R_{N1} and R_{N2} may be the same, or may be different from each other, and are independently selected from linear or branched alkyl groups -Cₙ H₂ₙ₊₁ having from n = 1 to n = 20 carbon atoms;
- phosphate -O-P(O)(OR_{P})₂ groups, where the groups R_{P} may be the same, or may be different from each other, and are independently selected from linear or branched alkyl groups -Cₙ H₂ₙ₊₁ having from n = 1 to n = 20 carbon atoms;
- phosphonate -P(O)(OR_{P})₂ groups, where the groups R_{P} may be the same, or may be different from each other, and are independently selected from linear or branched alkyl groups -Cₙ H₂ₙ₊₁ having from n = 1 to n = 20 carbon atoms;
- cyanate -O-C≡N groups; cyano (nitrile) -C≡N groups;
- nitro -NO₂ groups;
- thiol -SH groups;
- halogen -F, -Cl, -Br, -I groups;
- (per)fluoroalkyl groups;
- oligo-siloxane groups;
- poly-siloxane groups,
- cooling the solution of the first step to a temperature of 25 °C or less,
- adding to the cooled solution of the second step, a solution of an alkali nitrite, and mixing the resulting combined solution at a temperature of 25 °C or less, and keeping the mixture until the nitrite is consumed and the reaction is completed, under formation of a diazonium compound **B,**
- adding the mixture of the third step comprising a diazonium compound **B** to a solution or slurry of at least one oligomeric or polymeric phenolic material **K** having aromatic moieties with increased electron density in comparison with benzene at unsubstituted carbon atoms in the said aromatic moiety,
wherein the quantity of the mixture of the third step is chosen such that the ratio *m*(**B**) / *m*(**K**) of the mass *m*(**B**) of aromatic diazonium compounds **B** to the mass *m*(**K**) of the resinous oligomeric or polymeric phenolic materials **K** can be chosen between 0.1 % and 50 %, preferably between 0.5 % and 35 %, and particularly preferred, between 1 % and 25 %.

14. A method of use of the modified resins **M** of claim 1, or made according to claim 13, as adhesives for composite wood materials, as binders for organic or inorganic fibre products, as binders for coatings, as binders in abrasive materials or in friction materials such as brake pads, in heat and sound insulation materials, as foams, or as foundry moulds.
